# EUROPEAN PATENT SPECIFICATION

(11) **EP 1 095 558 B1**
(45) Date of publication and mention of the grant of the patent: **16.04.2003**
(21) Application number: 01200324.0
(22) Date of filing: 23.04.1997
(51) Int. Cl.: A01F 15/02, A01F 15/00, A01F 15/04

(54) **A bale press**
Ballenpresse
Presse à balles

(30) Priority: 25.04.1996 NL 1002947
(43) Date of publication of application: 02.05.2001
(62) Divisional of application: 97201210.8
(73) Proprietor: MAASLAND N.V., 3155 PD Maasland (NL)
(72) Inventor: van der Lely, Olaf, 6300 Zug (CH); Wilkens, Dieter, 38302 Wolfenbüttel (DE)
(74) Representative: Corten, Maurice Jean F.M.

(56) References cited:
- EP-A- 0 009 850
- EP-A- 0 315 521
- DD-A- 92 339
- DE-C- 3 809 132
- GB-A- 2 207 084
- US-A- 4 158 994
- US-A- 5 081 922

## Description

The present invention relates to a bale press provided with a compression chamber including a ram for pressing material to be formed into a bale, which ram is movable in a reciprocating manner.

Such a bale press is known from EP-A-0196878. In this document a movable bale press is described comprising a pick-up for collecting crop from the field and comprising a conventional baler feed system which transfers the collected material into a bale chamber. The working of the press is such that when the bale chamber is filled till a predetermined level, rams lying alongside the bale chamber are extended which force a carriage towards the end of the bale chamber to compress the crop. Once the bale is tied, the bottom of the bale chamber is opened and a downward force is applied by a plunger to let the bale fall unobstructed to the ground.

In modern versions of bale presses, in particular the so-called bigbalers there are achieved high densities of 250 kg per cubic metre and more. The advantages of such densities are: favourable possibilities of transport, smaller storage space required and a good conservation quality of the pressed material. The present invention aims at achieving an even higher density, in particular a maximum density, of the pressed bales.

In accordance with the invention, this is achieved in a construction as described in the characterizing part of claim 1. Such a construction will lead to a favourable use of the space available in the bale press, an increase of the conveying capacity and an improved compressing function in the conventional compression chamber.

In US-A-4158994 a bale press is described for recompressing bales which were baled on the field to about one-half their original length. Hereto the field bales are fed along a conventional conveyer where they are moved then laterally by a conventional ram into a bale chamber to be recompacted. The recompacting apparatus includes a ram attached to a plate which moves lengthways in the dead ended bale chamber. After recompacting and tying, the bale is discharged out the opposite side of the bale chamber.

According to the invention, a tying device constituting part of the bale press will preferably be operative in the second further processing chamber. In an economical preferred embodiment, the tying device will be operative in the processing chamber in which a bale formed is post-compressed.

A further specific embodiment of the bale press according to the invention relates to a bale press provided with a post-compression device comprising a pressing element on which an adjusting element is operating, on which adjusting element a vibrator device is acting, while by means of the above-mentioned device there is exerted a post-compression pressure on the material to be pressed.

Said vibrator device may comprise an eccentric mechanism, such as a motor-driven shaft having one or more cams provided along its circumference. In a preferred embodiment, such a vibrator device has a frequency being at least a factor 10 greater than the frequency of the ram of the conventional pressing device. Such a post-compression device will promote the setting of the bale, i.e. the mutual arrangement of the material elements present in the bale, and will thus contribute to achieving the maximum density of a bale.

For a better understanding of the invention, reference will now be made to the accompanying drawings, in which:
Figure 1 shows schematically, in side view, a bale press according to the invention;
Figure 2 is a cross-section taken on the line II - II in Figure 1, and
Figure 3 is a view according to the arrow III in Figure 2.

Corresponding elements in the drawings are indicated by the same reference numerals. The invention is by no means restricted to the embodiments shown and described; they only serve to illustrate the inventive idea.

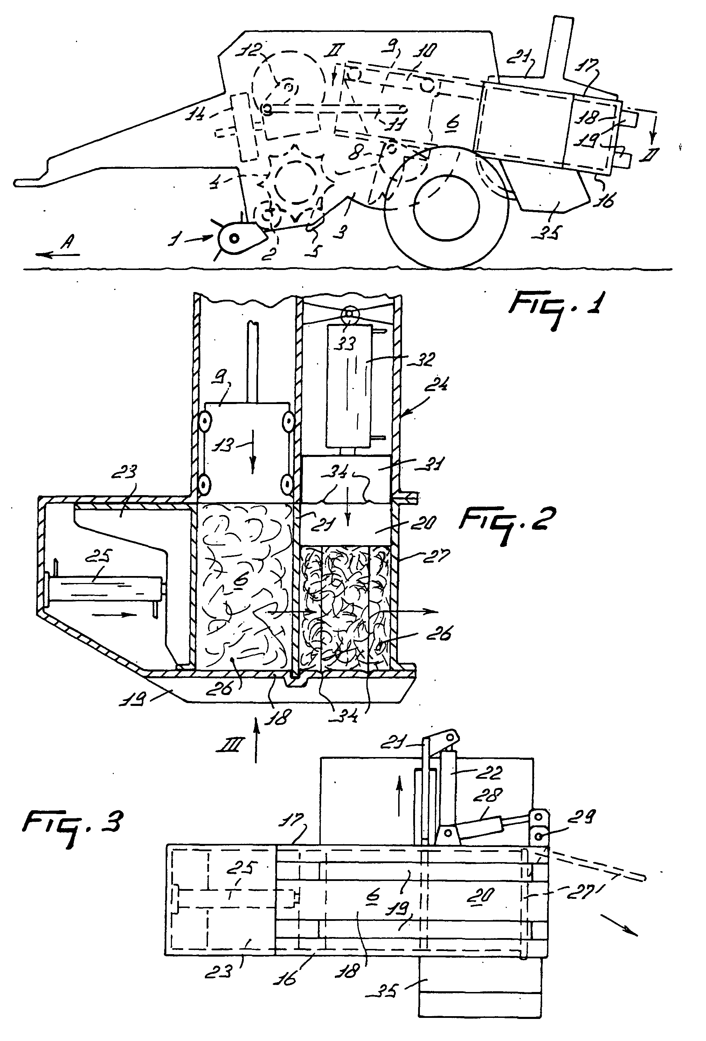

Figure 1 shows a bale press in a drawn position. The bale press comprises a pick-up element 1 for picking up material lying on the ground, such as crop, e.g. hay or straw, a displacing member 2, cooperating with the pick-up element 1, for displacing picked up material in the lateral direction of the machine to a central supply opening of the machine, to which supply opening a conveyor channel 3 is connected. In the conveyor channel 3 there is arranged a rotor 4 for ensuring the conveyance of crop in said conveyor channel. Optionally, the rotor 4 will cooperate with a row of knives 5, capable of being put into and out of operation, arranged transversely to the direction of conveyance, for processing the material picked up into shorter lengths. The conveyor channel 3 extends beyond the rotor 4 via a curve in upward direction and debouches into the front part of a compression chamber 6 extending transversely to the conveyor channel 3 and substantially in the direction of travel A. In the present embodiment, viewed in a cross-section transversely to the direction of compression in the compression chamber 6, said compression chamber 6 is rectangular. In the compression chamber 6 a ram 9, also to be designated as a pressing block or pressing element 9, is movable in a reciprocating manner in a straight line of the direction of compression 13, in the present embodiment via a straight guide means 10. The direction of compression 13 is parallel to the longitudinal direction of a bale formed in the compression chamber 6. The ram 9 is driven by means of a drive mechanism including a connecting rod 11 which is pivotably connected at one end to said ram 9 and at the other end to a rotatable drive arm 12 which is driven about a shaft. The drive mechanism also comprises a fly wheel 14 connected to the drive arm 12. The drive mechanism may be coupled with a power take-off shaft of a tractor and may, alternatively, be provided with an own motor.

Figure 2 shows the ram 9 in an outermost position in the compression chamber 6, which is confined by a lower and an upper lying fixed wall, a rearmost fixed wall 18 extending transversely to the direction of the stroke of the ram 9, which wall 18 is provided in the present embodiment with a stiffening 19 constituted by a U-profile. The compression chamber 6 is further constituted by two movable upright walls. One of these walls, the partition 21, separates the compression chamber 6 from a so-called post-compression chamber 20 and, in the present embodiment, is included in the machine so as to be movable in at least one of its directional components. For that purpose, the partition 21 is movable by means of an adjusting element 22, such as a hydraulic cylinder, which is automatically controlled by means of a sequence switch system pertaining to the machine. In the present embodiment, the partition 21 is lifted vertically, over at least the height of a bale 26 pre-formed in the compression chamber 6, from its position during operation, such that the pre-formed bale 26 can be moved under the wall 21.

The other upright wall of the compression chamber 6 is constituted by a slide 23 movable transversely to the direction of the stroke of the ram 9. For that purpose, an adjusting element 25, constituted by a hydraulic cylinder, is acting thereon. The adjusting element 25 is also automatically controlled by means of the aforementioned sequence switch system pertaining to the machine. In the wall 18 there are further provided non-shown pressure sensors. After it has been automatically established that an (adjustable) threshold value in the pressure in the compression chamber 6 observed by the sensors has been exceeded, by means of said pressure sensors the adjusting elements 25 and 22 are automatically controlled consecutively in such a manner that, by means of the slide 23 and the adjusting element 25, a bale 26 pre-formed in the compression chamber 6 will be displaced to an adjacent processing chamber 20, also to be designated as a post-compression chamber 20.

According to the invention, displacement to the chamber 20 will be possible in an alternative manner after there has been detected by a detector, e.g. an optical detector, cooperating with a sequence switch system pertaining to the bale press that the compression chamber is filled, or each time after a number of strokes of the ram 9, which number is adjustable in the sequence switch system.

The post-compression chamber 20, which constitutes part of a post-compression device 44 and equals in size the volume of a pre-compressed bale 26, comprises a wall 27 arranged in the longitudinal direction of the bale 26, i.e. in the direction of the stroke of the ram 9. The wall 27 is pivotable about a shaft 29 via an adjusting element 28 in such a manner that through the created opening a bale can be removed from the post-compression chamber 20. In the post-compression chamber 20 a pressing element 31, movable parallel to the ram 9, can be displaced by means of an adjusting element 32 constituted by a hydraulic cylinder. In the rear wall of the post-compression chamber 20, constituted in this case by the produced part of the wall 18, and in the bottom wall of said post-compression chamber 20, which bottom wall is in an analogous manner a continuation of the lower fixed wall 16, there are provided recesses 34. Said recesses 34 are adapted to accommodate tying elements, such as cords, for tying a bale whether or not post-compressed together. With the present post-compression device there can be achieved for the material hay a density which is considerably higher than 250 kg/m3. For the purpose of tying or wrapping a pre-formed, possibly post-compressed bale, the machine is provided with a tying device which is for the greater part a conventional one. In accordance with the invention, there is included a tying device active in the processing chamber 20. However, said tying device 35 may also be disposed in a second further processing chamber. It will be possible to deposit a post-compressed bale into said second further processing chamber and to remove same therefrom in an analogous manner as described above.

The function of the machine described in the foregoing will be as follows.

The material picked up by means of the pick-up member 1, collected in the compression chamber 6, and pressed by means of the ram 9, will obtain an estimated maximum density, which will be automatically established by means of the aforementioned sensors in the rearmost wall 18. In accordance with the invention, the estimated maximum pressure will constitute an adjustable threshold value in the machine. When the pressure established in the machine has exceeded this threshold value, the partition 21 will automatically be put out of the position in which it separates the compression chamber 6 from the post-compression chamber 20, and the adjusting element 25 will be activated immediately after the ram 9 has reached its outermost position. In a previous stage the partition 21 and the pivotable wall 27 have been operated, so that a bale pre-formed in the compression chamber 6 will be shifted into the post-compression chamber 20 and a ready bale, whether or not post-compressed and tied together, which may be present therein, will be pushed out of the post-compression chamber 20 by the pre-formed bale 26, i.e. via the opening created by the pivotal movement of the wall 27. After the slide 23, the partition 21 and the wall 27 have returned into their initial position, via the recesses 34 there will be disposed tying elements around the pre-formed bale 26 present in the post-compression chamber 20, whereafter, via the adjusting element 32 and the pressing element 31, there will be exerted automatically and during an uninterrupted period of time an at least comparatively constant pressure on the bale. Consequently the material in the bale will set and transform and the bale will gradually become more compact. The post-compression device according to the invention ensures inter alia by the magnitude and the continuous character of the pressure exerted thereby that relaxation of the pressed material, i.e. springing back of the compressed material after compression, will not occur. According to the hypothesis on which the invention is based this is a result of mutual arrangement or "setting" of material elements and of permanent changes in the material occurring under the influence of said factors. The vibration frequency is a factor 10 to 100 greater than that of the ram 9, which may amount to 10 to 100 strokes per minute.

In a specific embodiment according to the invention, there is included a vibrator device 33 in the post-compression device. Said vibrator device 33 comprises a preferably hydraulically driven eccentric mechanism by means of which there can be exerted a high pressure on the bale to be post-compressed, said pressure varying at a high frequency within a small margin. For example, such a mechanism may be disposed at one of the two ends of the adjusting element 32, e.g. between the adjusting element 32 and the pressing element 31, or, as shown, between the adjusting element 32 and the frame of the bale press. The embodiment represented in Figure 2 shows a disc disposed eccentrically on a vertical shaft, at the lower side of which there is arranged a hydraulically driven motor, said motor and said shaft both being supported against the frame via two laterally extending triangular supports. In a preferred embodiment, there is also provided a support arranged in the direction of compression. Such a vibrator device has a vibrating effect on the pressure applied on the bale to be post-compressed and will promote the "setting" of the material in the bale to be post-compressed. The vibrator device 33 described here is also applicable in the versions of the post-compression device described hereafter. The amplitude of the vibrator device is so small that the relatively high pressure acting on the bale to be post-compressed will remain comparatively constant, partly because of the high pressure of the adjusting element 32.

After there has been automatically established by means of the aforementioned sensors in the compression chamber 20 that the pressure has reached a pre-adjustable percentage of the threshold value, e.g. 80% thereof, the tying elements will be pulled and be knotted in a conventional manner and the pressing element 31 will be automatically brought into an initial position in which the pressing surface is located in the produced part of the pressing surface of the ram 9 when the latter is in its outermost position. Then the pressing surface of the pressing element 31 will constitute a guide means for displacing a pre-formed bale 26 from the compression chamber 6 to the compression chamber 20. After the pressing element 31 has returned into its initial position and the ram 9 has returned into its outermost position, the pressing and post-compressing process described is repeated. In a preferred embodiment of the invented construction, there is included in the post-compression device a measuring member by means of which the length of the bale obtained during post-compression is determined. For that purpose, in the present embodiment, there is included in the post-compression chamber an infrared detector co-operating with the sequence switch system. In an alternative embodiment, the pressing element 31 will control during its displacement a switch which is movably included in the post-compression device, said switch constituting part of the sequence switch system.

## Claims

1. A bale press provided with a compression chamber (6) including a ram (9) for pressing material to be formed into a bale, which ram (9) is movable in a reciprocating manner, **characterized in that** the bale press comprises displacing means (23, 25) for displacing a bale formed in the compression chamber (6), transversely to the direction of the stroke (13) of the ram (9), to a further processing chamber (20) and **in that** the bale press is provided with a post-compression device (24) which performs one pressing stroke during the time when a bale is being formed in the compression chamber (6).

2. A bale press as claimed in claim 1, **characterized in that** the bale press is provided with a tying device (35) which is located in the region of a post-compression chamber (20) and which is operative therein.

3. A bale press as claimed in claim 1 or 2, **characterized in that** a formed bale in the compression chamber (6) is post-compressed during a period of time corresponding approximately to the period of time in which a bale is being formed in the compression chamber (6).

4. A bale press as claimed in claim 1 or 2, **characterized in that** a formed bale is post-compressed during at least half the time in which a bale is being formed in the compression chamber (6).

5. A bale press as claimed in any one of the preceding claims, **characterized in that** the bale press is constituted by a mobile bale press provided with a pick-up member (1) for picking up crop lying on the ground.

6. A bale press as claimed in any one of the preceding claims, **characterized in that** the displacing means (23, 25) are active in horizontal direction.

7. A bale press as claimed in any one of the preceding claims, **characterized in that** the bale press is provided with detecting means for detecting an operational situation offering the condition for automatically activating the displacing means (23).

8. A bale press as claimed in claim 7, **characterized in that** the detecting means are produced for counting the number of strokes performed by the ram (9).

9. A bale press as claimed in claim 7 or 8, **characterized in that** the detecting means are produced for determining the degree of filling of the compression chamber (6).

10. A bale press as claimed in claim 7, 8 or 9, **characterized in that** the detecting means are produced for determining the pressure in the compression chamber (6).

11. A bale press as claimed in claim 1, **characterized in that** the post-compression device is provided with pressing means for post-compressing a bale transversely to the direction of the stroke (13) of the ram (9).

12. A bale press as claimed in any one of the preceding claims, **characterized in that** the bale press is provided with at least one pressing element (31) operative in the longitudinal direction of a compression chamber (6) or a compression channel.

13. A bale press as claimed in any one of the preceding claims, **characterized in that** a further processing chamber (20) is provided with a tying device (35) for tying a formed bale (26) together.

14. A bale press as claimed in any one of the preceding claims, **characterized in that** a compression chamber (6, 20) is provided with a counterpressure screen (18) extending transversely to the direction of compression (13).

15. A bale press as claimed in any one of the preceding claims, **characterized in that** a screen or wall portion arranged transversely to a relevant direction of compression is included in the bale press so as to be movable in such a manner that a bale (26) is capable of being removed from the further compression chamber (20) opposite to the direction of travel (A) .

16. A bale press as claimed in any one of the preceding claims, **characterized in that** the further compression chamber (20) is provided with a movable floor for ejecting a formed bale in downward direction.

17. A bale press as claimed in any one of the preceding claims, **characterized in that** the compression time in the further compression chamber (20) corresponds at least nearly to the compression time in the compression chamber, reduced by the time required for tying a bale.

18. A bale press as claimed in any one of the preceding claims, **characterized in that** a bale is capable of being ejected transversely to the direction of compression (13).

19. A bale press as claimed in claim 18, **characterized in that** the ejection opening can be created by means of a wall (27) arranged transversely to the direction of displacement of a formed bale.

20. A bale press as claimed in claim 19, **characterized in that** near its upper side the wall (27) is pivotable about a shaft (29).

21. A bale press as claimed in any one of the preceding claims, **characterized in that** there is provided a pre-compression device between a supply opening of the machine for introducing material to be pressed into the machine and the compression chamber (6).

22. A bale press as claimed in any one of the preceding claims, **characterized in that** the bale press is provided with a pre-compression device by means of which the material to be pressed is pre-pressed in a direction transverse to the direction of movement (13) of the ram (9) and substantially in a column having the height and the width of the compression chamber (6) prior to being supplied to the compression chamber.

23. A bale press as claimed in any one of the preceding claims, **characterized in that** the bale press is provided with a post-compression device movable in the longitudinal direction (13) of the compression channel.

24. A bale press as claimed in any one of the preceding claims, **characterized in that** the bale press is provided with a movable post-compression device which is pushed ahead by a bale formed or to be formed in the relevant compression channel.

25. A bale press as claimed in any one of the preceding claims, **characterized in that** the bale press comprises a post-compression device provided with a vibrator device (33) in such a way that an at least almost constant high pressure is exerted in a vibrating manner on the bale to be post-compressed.

26. A bale press as claimed in any one of the preceding claims, **characterized in that** the bale press comprises a vibrator device (33) which is provided with an eccentric mechanism, in particular a motor-driven shaft, along the circumference of which there are provided one or more cams.

27. A bale press as claimed in any one of the preceding claims, as far as referring to claim 12, **characterized in that** the pressing element (31) is activated by means of an adjusting element (32) suitable for applying a constant high pressure.

28. A bale press as claimed in any one of the preceding claims, **characterized in that** there are provided means for pulling and reknotting tying means disposed around a pressed bale after the latter has been post-compressed.

29. A bale press as claimed in any one of the preceding claims, **characterized in that** the bale press comprises two or more post-compression chambers.

30. A bale press as claimed in any one of the preceding claims, **characterized in that** the bale press comprises adjusting means for adjusting the maximum length of the stroke of a pressing element of the post-compression device.

31. A bale press as claimed in any one of the preceding claims, **characterized in that** the bale press comprises adjusting means for adjusting the maximum time during which a pressing element of the post-compression device is active.

## Patentansprüche

1. Ballenpresse mit einer Preßkammer (6) und einem Preßkolben (9) zum Pressen von zu einem Ballen zu formendem Gut, wobei der Preßkolben (9) hin- und herbewegbar ist,
**dadurch gekennzeichnet, daß** die Ballenpresse eine Verlagerungsvorrichtung (23, 25) umfaßt, um einen in der Preßkammer (6) geformten Ballen quer zur Hubrichtung (13) des Preßkolbens (9) einer weiteren Verarbeitungskammer (20) zuzuführen, sowie dadurch, daß die Ballenpresse mit einer Nachverdichtungsvorrichtung (24) versehen ist, die in der Zeit, in der ein Ballen in der Preßkammer (6) geformt wird, eine Preßbewegung ausführt.

2. Ballenpresse nach Anspruch 1,
**dadurch gekennzeichnet, daß** die Ballenpresse einen Bindeapparat (35) aufweist, der im Bereich einer Nachpreßkammer (20) angeordnet und in dieser wirksam ist.

3. Ballenpresse nach Anspruch 1 oder 2,
**dadurch gekennzeichnet, daß** ein in der Preßkammer (6) geformter Ballen innerhalb eines Zeitraumes nachverdichtet wird, der etwa dem Zeitraum entspricht, in dem ein Ballen in der Preßkammer (6) geformt wird.

4. Ballenpresse nach Anspruch 1 oder 2,
**dadurch gekennzeichnet, daß** ein geformter Ballen in mindestens der Hälfte der Zeit nachverdichtet wird, in der ein Ballen in der Preßkammer (6) geformt wird.

5. Ballenpresse nach einem der vorhergehenden Ansprüche,
**dadurch gekennzeichnet, daß** die Ballenpresse durch eine verfahrbare Ballenpresse gebildet ist, die mit einer Pick-up-Trommel (1) zum Aufnehmen von auf dem Boden liegendem Erntegut versehen ist.

6. Ballenpresse nach einem der vorhergehenden Ansprüche,
**dadurch gekennzeichnet, daß** die Verlagerungsvorrichtung (23, 25) in horizontaler Richtung wirksam ist.

7. Ballenpresse nach einem der vorhergehenden Ansprüche,
**dadurch gekennzeichnet, daß** die Ballenpresse mit einer Ermittlungsvorrichtung versehen ist, um eine Betriebssituation zu ermitteln, die die Bedingung zur automatischen Aktivierung der Verlagerungsvorrichtung (23) erfüllt.

8. Ballenpresse nach Anspruch 7,
**dadurch gekennzeichnet, daß** die Ermittlungsvorrichtung dazu ausgelegt ist, die Anzahl der von dem Preßkolben (9) ausgeführten Hubbewegungen zu zählen.

9. Ballenpresse nach Anspruch 7 oder 8,
**dadurch gekennzeichnet, daß** die Ermittlungsvorrichtung dazu ausgelegt ist, den Füllungsgrad der Preßkammer (6) zu ermitteln.

10. Ballenpresse nach Anspruch 7, 8 oder 9,
**dadurch gekennzeichnet, daß** die Ermittlungsvorrichtung dazu ausgelegt ist, den Druck in der Preßkammer (6) zu ermitteln.

11. Ballenpresse nach Anspruch 1,
**dadurch gekennzeichnet, daß** die Nachverdichtungsvorrichtung mit einer Druckvorrichtung versehen ist, um einen Ballen quer zur Hubrichtung (13) des Preßkolbens (9) nachzuverdichten.

12. Ballenpresse nach einem der vorhergehenden Ansprüche,
**dadurch gekennzeichnet, daß** die Ballenpresse mit mindestens einem Druckelement (31) versehen ist, das in Längsrichtung einer Preßkammer (6) oder eines Preßkanals wirksam ist.

13. Ballenpresse nach einem der vorhergehenden Ansprüche,
**dadurch gekennzeichnet, daß** eine weitere Verarbeitungskammer (20) mit einem Bindeapparat (35) zum Zusammenbinden eines geformten Ballens (26) versehen ist.

14. Ballenpresse nach einem der vorhergehenden Ansprüche,
**dadurch gekennzeichnet, daß** eine Preßkammer (6, 20) mit einer Gegendruckplatte (18) versehen ist, die sich quer zur Preßrichtung (13) erstreckt.

15. Ballenpresse nach einem der vorhergehenden Ansprüche,
**dadurch gekennzeichnet, daß** eine quer zu einer jeweiligen Preßrichtung angeordnete Platte oder ein Wandteil in der Ballenpresse vorhanden und derart bewegbar ist, daß ein Ballen (26) in zur Arbeitsrichtung (A) entgegengesetzter Richtung aus der weiteren Preßkammer (20) entfernt werden kann.

16. Ballenpresse nach einem der vorhergehenden Ansprüche,
**dadurch gekennzeichnet, daß** die weitere Preßkammer (20) mit einem bewegbaren Boden versehen ist, um einen geformten Ballen nach unten auszuwerfen.

17. Ballenpresse nach einem der vorhergehenden Ansprüche,
**dadurch gekennzeichnet, daß** die Verdichtungszeit in der weiteren Preßkammer (20) mindestens annähernd der Verdichtungszeit in der Preßkammer abzüglich der zum Binden eines Ballens benötigten Zeit entspricht.

18. Ballenpresse nach einem der vorhergehenden Ansprüche,
**dadurch gekennzeichnet, daß** ein Ballen quer zur Preßrichtung (13) ausgeworfen werden kann.

19. Ballenpresse nach Anspruch 18,
**dadurch gekennzeichnet, daß** die Auswurföffnung durch eine Wand (27) gebildet werden kann, die quer zur Transportrichtung eines geformten Ballens angeordnet ist.

20. Ballenpresse nach Anspruch 19,
**dadurch gekennzeichnet, daß** die Wand (27) nahe ihrer Oberseite um eine Achse (29) schwenkbar ist.

21. Ballenpresse nach einem der vorhergehenden Ansprüche,
**dadurch gekennzeichnet, daß** zwischen einer Zuführöffnung der Maschine zum Einleiten von zu pressendem Gut in die Maschine und der Preßkammer (6) eine Vorverdichtungsvorrichtung angeordnet ist.

22. Ballenpresse nach einem der vorhergehenden Ansprüche,
**dadurch gekennzeichnet, daß** die Ballenpresse mit einer Vorverdichtungsvorrichtung versehen ist, mittels der das zu pressende Gut in einer quer zur Bewegungsrichtung (13) des Preßkolbens (9) verlaufenden Richtung und im wesentlichen zu einer Säule vorverdichtet wird, die die Höhe und Breite der Preßkammer (6) hat, bevor das Gut der Preßkammer zugeführt wird.

23. Ballenpresse nach einem der vorhergehenden Ansprüche,
**dadurch gekennzeichnet, daß** die Ballenpresse mit einer Nachverdichtungsvorrichtung versehen ist, die in Längsrichtung (13) des Preßkanals bewegbar ist.

24. Ballenpresse nach einem der vorhergehenden Ansprüche,
**dadurch gekennzeichnet, daß** die Ballenpresse mit einer beweglichen Nachverdichtungsvorrichtung versehen ist, die von einem geformten oder zu formenden Ballen in dem jeweiligen Preßkanal nach vorn gedrückt wird.

25. Ballenpresse nach einem der vorhergehenden Ansprüche,
**dadurch gekennzeichnet, daß** die Ballenpresse eine Nachverdichtungsvorrichtung umfaßt, die mit einer Rüttelvorrichtung (33) versehen ist, so daß ein mindestens annähernd konstanter hoher Druck in vibrierender Weise auf den nachzuverdichtenden Ballen ausgeübt wird.

26. Ballenpresse nach einem der vorhergehenden Ansprüche,
**dadurch gekennzeichnet, daß** die Ballenpresse eine Rüttelvorrichtung (33) umfaßt, die mit einem Exzenter, insbesondere mit einer motorisch angetriebenen Welle, versehen ist, an deren Umfang ein oder mehrere Nocken angeordnet sind.

27. Ballenpresse nach einem der vorhergehenden Ansprüche, soweit auf Anspruch 12 rückbezogen,
**dadurch gekennzeichnet, daß** das Druckelement (31) mittels eines Stellgliedes (32) aktiviert wird, das geeignet ist, einen konstanten hohen Druck auszuüben.

28. Ballenpresse nach einem der vorhergehenden Ansprüche,
**dadurch gekennzeichnet, daß** eine Vorrichtung vorhanden ist, um Bindemittel zu ziehen und erneut zu verknüpfen, die um einen gepreßten Ballen herum angeordnet sind, nachdem dieser nachverdichtet worden ist.

29. Ballenpresse nach einem der vorhergehenden Ansprüche,
**dadurch gekennzeichnet, daß** die Ballenpresse zwei oder mehr Nachpreßkammern umfaßt.

30. Ballenpresse nach einem der vorhergehenden Ansprüche,
**dadurch gekennzeichnet, daß** die Ballenpresse eine Stellvorrichtung umfaßt, um die maximale Länge des Hubes eines Druckelementes der Nachverdichtungsvorrichtung einzustellen.

31. Ballenpresse nach einem der vorhergehenden Ansprüche,
**dadurch gekennzeichnet, daß** die Ballenpresse eine Stellvorrichtung umfaßt, um die maximale Zeit einzustellen, in der ein Druckelement der Nachverdichtungsvorrichtung wirksam ist.

## Revendications

1. Presse à balles pourvue d'une chambre de compression (6) comprenant un poussoir (9) pour presser les matériaux et les compacter en forme de balle, lequel poussoir (9) est animé d'un mouvement de va-et-vient, **caractérisée en ce que** la presse à balles est pourvue de moyens de déplacement (23, 25) pour déplacer une balle formée dans la chambre de compression (6), transversalement à la direction de la course (13) du poussoir (9), vers une chambre de traitement additionnelle (20) et **en ce que** la presse à balles est pourvue d'un dispositif de post-compression (24) qui réalise un cycle de presse pendant qu'une balle se forme dans la chambre de compression (6).

2. Presse à balles selon la revendication 1, **caractérisée en ce que** la presse à balles est pourvue d'un dispositif de liage (35) qui est situé dans la zone d'une chambre de post-compression (20) et qui fonctionne à l'intérieur de celle-ci.

3. Presse à balles selon la revendication 1 ou 2, **caractérisée en ce qu'**une balle formée dans la chambre de compression (6) est post-compressée durant un laps de temps correspondant approximativement au laps de temps pendant lequel une balle est formée dans la chambre de compression (6).

4. Presse à balles selon la revendication 1 ou 2, **caractérisée en ce qu'**une balle formée est post-compressée durant au minimum la moitié du temps pendant lequel une balle est formée dans la chambre de compression (6).

5. Presse à balles selon l'une quelconque des revendications précédentes, **caractérisée en ce que** la presse à balles est constituée d'une presse à balles mobile pourvue d'un organe de ramassage (1) pour ramasser la récolte répandue sur le sol.

6. Presse à balles selon l'une quelconque des revendications précédentes, **caractérisée en ce que** les moyens de déplacement (23, 25) fonctionnent à l'horizontale.

7. Presse à balles selon l'une quelconque des revendications précédentes, **caractérisée en ce que** la presse à balles est pourvue de moyens de détection pour détecter une situation opérationnelle offrant les conditions pour activer automatiquement les moyens de déplacement (23).

8. Presse à balles selon la revendication 7, **caractérisée en ce que** les moyens de détection sont conçus pour compter le nombre de courses réalisées par le poussoir (9).

9. Presse à balles selon la revendication 7 ou 8, **caractérisée en ce que** les moyens de détection sont conçus pour déterminer le degré de remplissage de la chambre de compression (6).

10. Presse à balles selon la revendication 7, 8 ou 9, **caractérisée en ce que** les moyens de détection sont conçus pour déterminer la pression dans la chambre de compression (6).

11. Presse à balles selon la revendication 1, **caractérisée en ce que** le dispositif de post-compression est pourvu de moyens de presse pour post-compresser une balle transversalement à la direction de la course (13) du poussoir (9).

12. Presse à balles selon l'une quelconque des revendications précédentes, **caractérisée en ce que** la presse à balles est pourvue au minimum d'un élément de presse (31) opérant dans la direction longitudinale d'une chambre de compression (6) ou d'un canal de compression.

13. Presse à balles selon l'une quelconque des revendications précédentes, **caractérisée en ce qu'**une chambre de traitement additionnelle (20) est pourvue d'un dispositif de liage (35) pour lier ensemble une balle pressée (26).

14. Presse à balles selon l'une quelconque des revendications précédentes, **caractérisée en ce qu'**une chambre de compression (6, 20) est pourvue d'un écran de contre-pression (18) s'étendant transversalement par rapport à la direction de compression (13).

15. Presse à balles selon l'une quelconque des revendications précédentes, **caractérisée en ce qu'**un écran ou une partie de cloison disposé transversalement par rapport à une direction de compression appropriée est compris dans la presse à balles de sorte qu'il puisse bouger d'une façon qui permette d'enlever une balle (26) de la chambre de compression additionnelle (20) à l'opposé de la direction du déplacement (A).

16. Presse à balles selon l'une quelconque des revendications précédentes, **caractérisée en ce que** la chambre de compression additionnelle (20) est pourvue d'un plancher mobile pour éjecter vers le bas une balle formée.

17. Presse à balles selon l'une quelconque des revendications précédentes, **caractérisée en ce que** le temps de compression dans la chambre de compression additionnelle (20) correspond au minimum à peu près au temps de compression dans la chambre de compression, diminué du temps requis pour lier une balle.

18. Presse à balles selon l'une quelconque des revendications précédentes, **caractérisée en ce qu'**une balle peut être éjectée transversalement par rapport à la direction de compression (13).

19. Presse à balles selon la revendication 18, **caractérisée en ce que** l'ouverture pour l'éjection peut être créée au moyen d'une cloison (27) disposée transversalement par rapport à la direction de déplacement d'une balle formée.

20. Presse à balles selon la revendication 19, **caractérisée en ce que**, près de son bord supérieur, la cloison (27) peut pivoter autour d'un arbre (29).

21. Presse à balles selon l'une quelconque des revendications précédentes, **caractérisée en ce qu'**il est aménagé un dispositif de pré-compression entre une ouverture d'alimentation de la machine pour introduire les matériaux devant être pressés dans la machine, et la chambre de compression (6).

22. Presse à balles selon l'une quelconque des revendications précédentes, **caractérisée en ce que** la presse à balles est pourvue d'un dispositif de pré-compression au moyen duquel les matériaux devant être pressés sont pré-compressés selon une direction transverse à la direction du mouvement (13) du poussoir (9) et sensiblement dans une colonne ayant la hauteur et la largeur de la chambre de compression (6) avant d'être envoyés à la chambre de compression.

23. Presse à balles selon l'une quelconque des revendications précédentes, **caractérisée en ce que** la presse à balles est pourvue d'un dispositif de post-compression mobile selon la direction longitudinale (13) du canal de compression.

24. Presse à balles selon l'une quelconque des précédentes revendications, **caractérisée en ce que** la presse à balles est pourvue d'un dispositif mobile de post-compression qui est poussé en avant par une balle formée ou à former dans le canal de compression approprié.

25. Presse à balles selon l'une quelconque des revendications précédentes, **caractérisée en ce que** la presse à balles comprend un dispositif de post-compression pourvu d'un dispositif vibreur (33) de sorte qu'une haute pression au minimum presque constante est exercée en mode vibratoire sur la balle à post-compresser.

26. Presse à balles selon l'une quelconque des revendications précédentes, **caractérisée en ce que** la presse à balles comprend un dispositif vibreur (33) pourvu d'un mécanisme excentrique, en particulier un arbre entraîné par un moteur, sur la circonférence duquel sont disposées une ou plusieurs cames.

27. Presse à balles selon l'une quelconque des revendications précédentes, dès lors qu'elle se réfère à la revendication 12, **caractérisée en ce que** l'élément de presse (31) est activé au moyen d'un élément de réglage (32) approprié pour l'application d'une haute pression constante.

28. Presse à balles selon l'une quelconque des revendications précédentes, **caractérisée en ce qu'**il y a des moyens mis en place pour tirer et renouer les moyens de liage disposés autour d'une balle pressée après que cette dernière ait été post-compressée.

29. Presse à balles selon l'une quelconque des revendications précédentes, **caractérisée en ce que** la presse à balles comprend deux chambres de post-compression, ou plus.

30. Presse à balles selon l'une quelconque des revendications précédentes, **caractérisée en ce que** la presse à balles comprend des moyens de réglage pour régler la longueur maximum de la course d'un élément de presse du dispositif de post-compression.

31. Presse à balles selon l'une quelconque des revendications précédentes, **caractérisée en ce que** la presse à balles comprend des moyens de réglage pour régler le temps maximum pendant lequel un élément de presse du dispositif de post-compression est actif.
